# EUROPEAN PATENT APPLICATION

(11) **EP 4 546 206 A1**
(43) Date of publication of application: **30.04.2025**
(21) Application number: 23909891.6
(22) Date of filing: 29.11.2023
(51) Int. Cl.: G06F 40/166, G06F 40/131, G06Q 30/0601, G06F 18/214

(54) **TEXT PROCESSING MODEL TRAINING METHOD AND APPARATUS, TITLE GENERATION METHOD AND APPARATUS, DEVICE, AND MEDIUM**

(30) Priority: 27.12.2022 CN 202211707247
(71) Applicant: BEIJING YOUZHUJU NETWORK TECHNOLOGY CO. LTD., Beijing 101299 (CN)
(72) Inventor: CHENG, Xiang, Beijing 100028 (CN); CHEN, Jiaze, Beijing 100028 (CN)
(74) Representative: Williams, Michael David
(86) International application number: PCT/CN2023/134971
(87) International publication number: WO 2024/139961

(57) **Abstract**

Provided in the present disclosure are a text processing model training method and apparatus, a title generation method and apparatus, a device, and a medium. The text processing model training method comprises: acquiring a plurality of pieces of first title text, and inserting a mask segment into each piece of first title text multiple times, so as to obtain a plurality of pieces of second title text, into which the mask segment has been inserted, wherein the position where the mask segment is inserted into the first title text each time is different, and the number of characters of each piece of first title text is less than or equal to a preset number of characters; performing mask restoration processing on each piece of second title text on the basis of a trained mask restoration model, so as to obtain third title text after the first title text is expanded; and on the basis of the plurality of pieces of first title text and the plurality of pieces of third title text corresponding to the respective pieces of first title text, performing training to obtain a text processing model, which is used for performing title shortening processing, wherein during the training of the text processing model, the third title text is taken as input data, and the first title text is taken as output data.

## Description

The present application is based on and claims priority of China Patent Application No. 202211707247.8, filed on December 27, 2022, the disclosure of which is incorporated herein by reference in its entirety.

### TECHNICAL FIELD

The present disclosure relates to the field of computer technologies, and in particular, to a method, an apparatus, a device, and a medium for text processing model training and title generation.

### BACKGROUND

With the development of e-commerce, people can make purchases online to meet their daily needs. In an online shopping platform, merchants usually set corresponding product titles for products to recommend the products.

### SUMMARY

The embodiments of the present disclosure provide at least a method, an apparatus, a device, and a medium for text processing model training and title generation.

According to a first aspect, an embodiment of the present disclosure provides a text processing model training method. The method includes: acquiring a plurality of first title texts, and inserting mask segments into each first title text multiple times, to obtain a plurality of second title texts after each mask segment insertion, where mask segments are inserted into different positions of the first title text each time, and a number of characters in the first title text is less than or equal to a preset number of characters; performing mask restoration processing on each second title text based on a trained mask restoration model, to obtain a third title text obtained by expanding the first title text; and training a text processing model for title shortening based on the plurality of first title texts and a plurality of third title texts corresponding to each first title text, where during a training process of the text processing model, the third title text is used as input data, and the first title text is used as output data.

In an optional implementation, the inserting mask segments into each first title text multiple times includes: selecting insertion positions in each first title text by using a uniform distribution sampling manner, and inserting the mask segments.

In an optional implementation, the trained mask restoration model is obtained through training according to the following steps: acquiring a plurality of fourth title texts, and performing mask processing on each fourth title text multiple times, to obtain a plurality of fifth title texts, where a number of characters in the fourth title text is greater than the preset number of characters, a number of characters in the fifth title text is less than or equal to the preset number of characters, and at least one of a mask start position and a number of masked characters selected for each mask processing is different; and training a mask restoration model based on the plurality of fourth title texts and a plurality of fifth title texts corresponding to each fourth title text, where the mask restoration model uses the fifth title text as input data, and uses the fourth title text as output data.

In an optional implementation, the performing mask processing on each fourth title text multiple times includes: determining a mask start position for each mask processing by using a uniform distribution sampling manner; and/or determining a number of masked characters for each mask processing by using a Poisson distribution sampling manner.

In an optional implementation, the method further includes: acquiring label information of at least one text segment in the fourth title text, where the training a mask restoration model based on the plurality of fourth title texts and a plurality of fifth title texts corresponding to each fourth title text includes: training the mask restoration model based on the plurality of fourth title texts, the label information corresponding to each fourth title text, and the fifth title text.

In an optional implementation, the performing mask processing on each fourth title text multiple times includes: performing mask processing on each fourth title text multiple times according to a principle of integrity of the labeled text segment, where the principle of integrity indicates that: the fifth title text after mask processing needs to include all characters in the labeled text segment, or the fifth title text after mask processing does not include any character in the labeled text segment.

In an optional implementation, the performing mask processing on each fourth title text multiple times includes: when there are multiple labeled text segments in the fourth title text, performing mask processing on the fourth title text multiple times according to a frequent mask principle, where the frequent mask principle indicates that: when a labeled text segment in the fourth title text needs to be masked, a target text segment in multiple text segments is masked, where an occurrence frequency of the target text segment in each fourth title text is greater than occurrence frequencies of other text segments in the fourth title text.

In an optional implementation, after the label information is acquired and before the mask restoration model is trained based on the plurality of fourth title texts, the label information corresponding to each fourth title text, and the fifth title text, the method further includes: randomly adjusting a position of the labeled text segment in the fifth title text to obtain an adjusted fifth title text, where the adjusted fifth title text is used for participating in the training of the mask restoration model together with the fourth title text and the label information corresponding to the fourth title text.

According to a second aspect, an embodiment of the present disclosure provides a title generation method. The method includes: acquiring a to-be-processed title, where a number of characters in the to-be-processed title is greater than a preset number of characters; and performing shortening processing on the to-be-processed title by using a text processing model to obtain a target title, where the text processing model is trained by the text processing model training method according to any one of the first aspect.

According to a third aspect, an embodiment of the present disclosure further provides a text processing model training apparatus. The apparatus includes: a mask module, configured to acquire a plurality of first title texts, and insert mask segments into each first title text multiple times, to obtain a plurality of second title texts generated by each mask segment insertion, where mask segments are inserted into different positions of the first title text each time, and a number of characters in the first title text is less than or equal to a preset number of characters; a restoration module, configured to perform mask restoration processing on each second title text based on a trained mask restoration model, to obtain a third title text obtained by expanding the first title text; and a training module, configured to train a text processing model for title shortening based on the plurality of first title texts and a plurality of third title texts corresponding to each first title text, where for the training of the text processing model, the third title text is used as input data, and the first title text is used as output data. According to a fourth aspect, an embodiment of the present disclosure further provides a title generation apparatus. The apparatus includes: an obtaining module, configured to obtain a to-be-processed title, where a number of characters in the to-be-processed title is greater than a preset number of characters; and a processing module, configured to perform shortening processing on the to-be-processed title by using a text processing model to obtain a target title, where the text processing model is trained by the text processing model training method according to any one of the first aspect.

According to a fifth aspect, an embodiment of the present disclosure further provides a computer device. The computer device includes: a processor, a memory, and a bus, where the memory stores machine-readable instructions executable by the processor, when the computer device runs, the processor communicates with the memory through the bus, and the machine-readable instructions, when executed by the processor, cause the processor to perform the steps of the first aspect or any possible implementation of the first aspect, or perform the steps of the second aspect.

According to a sixth aspect, an embodiment of the present disclosure further provides a computer-readable storage medium. The computer-readable storage medium stores a computer program that, when run by a processor, causes the processor to perform the steps of the first aspect or any possible implementation of the first aspect, or perform the steps of the second aspect.

In order to make the above objects, features, and advantages of the present disclosure more comprehensible, the following describes embodiments in detail with reference to the drawings.

### BRIEF DESCRIPTION OF THE DRAWINGS

In order to describe the technical solutions of the embodiments of the present disclosure more clearly, the following briefly introduces the drawings that need to be used in the description of the embodiments. The drawings herein are incorporated into and constitute a part of the present specification, and the drawings illustrate the embodiments consistent with the present disclosure and are used in conjunction with the specification to illustrate the technical solutions of the present disclosure. It should be understood that the following drawings only show some embodiments of the present disclosure, and therefore should not be considered as limiting the scope of the present disclosure. For those of ordinary skill in the art, other related drawings can be obtained from these drawings without creative efforts.
FIG. 1 is a flowchart of a text processing model training method according to an embodiment of the present disclosure.
FIG. 2 is a schematic flowchart of a text processing model training method according to an embodiment of the present disclosure.
FIG. 3 is a flowchart of a title generation method according to an embodiment of the present disclosure.
FIG. 4 is a schematic diagram of a text processing model training apparatus according to an embodiment of the present disclosure.
FIG. 5 is a schematic diagram of a title generation apparatus according to an embodiment of the present disclosure.
FIG. 6 is a schematic diagram of a computer device according to an embodiment of the present disclosure.
FIG. 7 is a schematic diagram of another computer device according to an embodiment of the present disclosure.

### DETAILED DESCRIPTION OF EMBODIMENTS

In order to make the objects, technical solutions, and advantages of the embodiments of the present disclosure clearer, the technical solutions in the embodiments of the present disclosure will be described clearly and comprehensively below with reference to the drawings in the embodiments of the present disclosure. Obviously, the described embodiments are only part of the embodiments of the present disclosure, not all of them. The components of the embodiments of the present disclosure described and illustrated herein may be arranged and designed in various different configurations. Therefore, the following detailed description of the embodiments of the present disclosure provided in the drawings is not intended to limit the scope of the present disclosure claimed, but merely represents selected embodiments of the present disclosure. Based on the embodiments of the present disclosure, all other embodiments obtained by those of ordinary skill in the art without creative efforts fall within the protection scope of the present disclosure.

It should be noted that similar reference numbers and letters in the following drawings represent similar items. Therefore, once an item is defined in one drawing, it does not need to be further defined and explained in subsequent drawings.

The term "and/or" in this article only describes an association relationship, which means that there can be three relationships, for example, A and/or B, which can mean: A exists alone, A and B exist at the same time, and B exists alone. In addition, the term "at least one" in this article means any one of a plurality of kinds or any combination of at least two of a plurality of kinds, for example, including at least one of A, B, and C, which can mean including any one or more elements selected from a set composed of A, B, and C.

It is found through research that in an online shopping platform, a merchant usually sets a corresponding product title for a product to recommend the product. However, lengths of product titles that can be displayed in different product display scenarios are not the same. For example, a length of a product title displayed in a product card is shorter than that of a product title displayed in a product details page. Therefore, when the product title is long, the product title may be incompletely displayed in the product card, which affects user experience.

Based on this, there is a need to convert a long title text into a short title text, and a model that can perform title text shortening may be obtained by means of model training. During the model training, a large number of long and short title text pairs need to be constructed, that is, label annotation of related short title texts for a large number of long title texts is needed. This process requires a large amount of manpower costs, and label annotation results are highly subjective and the label annotation quality is not good.

In the related art, a neural network model is usually trained based on long and short title text pairs as training samples of a supervised neural network model, so that the trained neural network model may obtain a short product title corresponding to a long product title. However, the preceding training method of the supervised neural network model usually requires a large number of training samples, and a quality of the trained neural network model is highly dependent on a quality of the training samples.

Generally, a high-quality training sample may be obtained by means of manual label annotation. However, when a large number of training samples are needed, a workload of manual label annotation may be relatively large, and a cost of obtaining the training samples may be relatively high. In addition, when the trained neural network model is required to generate various styles of short product titles with different lengths, a workload of label annotation for each product title increases exponentially, which further increases the workload of manual label annotation and a cost of manual label annotation.

As can be known from the foregoing, a product title may be understood as recommendation information of a product. Therefore, to obtain a high-quality training sample, a label annotator of the training sample is usually required to have a certain understanding of an attribute of the product, so that a label annotation result of a high-quality product title may be obtained. Moreover, different label annotators have different understanding of the number of products, resulting in different title label annotation results, which affects quality of the training sample.

In the related art, a basic neural network model may also be optimized and iterated based on an interaction behavior of a user with a product title (for example, a better-quality short product title is determined based on clicks of the user), so as to obtain a high-quality neural network model, to generate a high-quality short product title corresponding to a long product title. However, in this training method, when the training method is started at the very beginning, the basic neural network model needs to be used to directly generate a corresponding short product title. As a result, when the training method is started, the quality of the generated short product title is poor, which affects quality of the recommendation information corresponding to the product online.

Based on the preceding research, the present disclosure provides a method, an apparatus, a device, and a medium for text processing model training and title generation. It can be learned from the preceding description that a plurality of first title texts (that is, short title texts) may be acquired, and mask segments are inserted into each first title text multiple times, to obtain a plurality of second title texts generated by each mask segment insertion. Subsequently, mask restoration processing may be performed on each second title text based on a trained mask restoration model, to obtain a third title text obtained by expanding the first title text. In this way, a long title text is obtained in a reverse expansion manner, that is, a training sample for training a title shortening model (that is, the text processing model in the embodiments of the present disclosure) is obtained. Then, a text processing model may be trained based on the plurality of first title texts and a plurality of third title texts corresponding to each first title text (each third title text and a corresponding first title text form a long and short title text pair). In addition, the mask segments are inserted into each first title text multiple times, so that each first title text may correspond to a plurality of second title texts, and the number of characters corresponding to each second title text is different. In this way, a number of characters in each third title text obtained by mask restoration processing on the second title text is also different, which not only expands a data volume of training samples for training the text processing model, but also improves training precision and training robustness of the text processing model.

It can be learned from the preceding description that a plurality of first title texts (that is, short title texts) may be acquired, and mask segments are inserted into each first title text multiple times, to obtain a plurality of second title texts generated by each mask segment insertion. Subsequently, mask restoration processing may be performed on each second title text based on a trained mask restoration model, to obtain a third title text obtained by expanding the first title text. In this way, a long title text is obtained in a reverse expansion manner, that is, a training sample for training a title shortening model (that is, the text processing model in the embodiments of the present disclosure) is obtained. Then, a text processing model may be trained based on the plurality of first title texts and a plurality of third title texts corresponding to each first title text (each third title text and a corresponding first title text form a long and short title text pair). In addition, the mask segments are inserted into each first title text multiple times, so that each first title text may correspond to a plurality of second title texts, and the number of characters corresponding to each second title text is different. In this way, a number of characters in each third title text obtained by mask restoration processing on the second title text is also different, which not only expands a data volume of training samples for training the text processing model, but also improves training precision and training robustness of the text processing model.

In addition, the embodiments of the present disclosure further provide a training manner of the preceding mask restoration model. That is, a plurality of fourth title texts (long title texts) are acquired, and mask processing is performed on each fourth title text multiple times by selecting a different mask start position and/or a different number of masked characters each time, to obtain a plurality of fifth title texts (short title texts). In this way, long and short title text pairs for training the mask restoration model are obtained, and the mask restoration model is then trained based on the fourth title text and the fifth title text. In this way, the trained mask restoration model may implement a capability of generating a long title text based on an existing short title text. Further, to improve accuracy of a training result of the mask restoration model and further improve quality of a title shortened by the text processing model for title text shortening, the embodiments of the present disclosure further introduce label information for some text segments in the long title text (which is different from directly performing short title text label annotation on the long title text) as auxiliary information to participate in training of the mask restoration model. In this way, the trained mask restoration model is more accurate, so that the training sample generated based on the mask restoration model may be further optimized, and quality of a finally obtained title shortened by the text processing model is better.

For ease of understanding of this embodiment, a text processing model training method disclosed in the embodiments of the present disclosure is first described in detail. An execution subject of the text processing model training method provided in the embodiments of the present disclosure is generally a computer device with a specific computing capability.

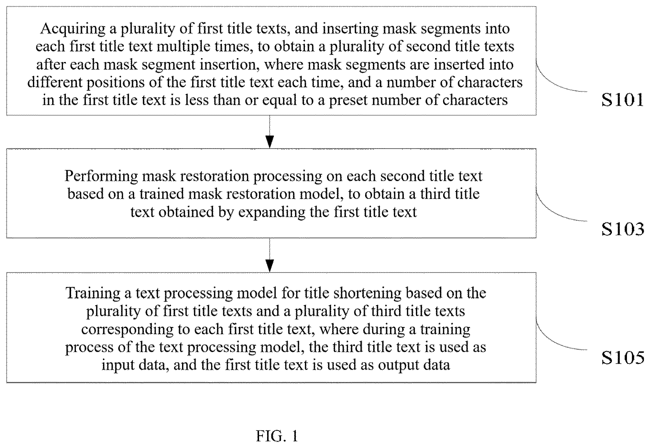

Referring to FIG. 1, a flowchart of a text processing model training method according to an embodiment of the present disclosure is shown. The method includes steps S101 to S105.

In S101, a plurality of first title texts are acquired, and mask segments are inserted into each first title text multiple times, to obtain a plurality of second title texts generated by each mask segment insertion, where mask segments are inserted into different positions of the first title text each time, and a number of characters in the first title text is less than or equal to a preset number of characters.

It should be noted that the text processing model training method provided in the embodiments of the present disclosure may be applied to various scenarios in which text length needs to be shortened. For example, the text processing model training method provided in the embodiments of the present disclosure may be applied to a product title shortening scenario and an article summary (or text segment) abbreviation scenario.

The text processing model training method provided in the embodiments of the present disclosure applied to the product title shortening scenario is used as an example for detailed description below.

In the embodiments of the present disclosure, the first title text may be understood as a title text in a title text library, where a number of characters in the first title text is less than or equal to a preset number of characters. The number of characters may be understood as a text length included in the title text. For example, when the title text is "cartoon Sesame Street chest bag", the number of characters in the title text is 7. The preset number of characters may indicate a maximum number of characters corresponding to a title text that is expected to be obtained by the text processing model. In this case, the preset number of characters may be a preset numerical value. For example, the preset number of characters may be n (n is a natural number greater than 0. For example, n may be 5 or 10), and the first title text may be a title text in the title text library, where a number of characters in the first title text is less than or equal to n.

In this case, the plurality of first title texts may be all title texts in the title text library, where a number of characters in each of the all title texts is less than or equal to n, or may be some title texts in the title text library, where a number of characters in each of the some title texts is less than or equal to n.

Here, the title text library may be understood as a database including a plurality of title texts, and a number of characters in each title text included in the title text library may be the same or different.

In the embodiments of the present disclosure, the title texts included in the title text library may correspond to a plurality of products, each product may correspond to a plurality of title texts, and a number of characters in a plurality of title texts corresponding to each product may be the same or different. For example, product 1 may correspond to five title texts, and a number of characters in the five title texts may be the same or different. In the embodiments of the present disclosure, the title text library may include at least one sub-title text library, and each sub-title text library may include a plurality of title texts. Each sub-title text library may indicate a type of product. For example, the sub-title text library may indicate "backpack", and in this case, the sub-title text library may include all title texts corresponding to "backpack". Alternatively, the sub-title text library may also indicate "coat", and in this case, the sub-title text library may include all title texts corresponding to "coat". In the embodiments of the present disclosure, after a plurality of first title texts are acquired, word segmentation processing may be performed on each first title text to obtain a word-segmented first title text. Subsequently, mask segments may be inserted into the word-segmented first title text multiple times. A word segmentation processing method may be performed according to a character granularity or a word granularity. In the embodiments of the present disclosure, after the word segmentation processing is performed on the first title text, a target segmented word may be determined in the word-segmented first title text, and a position before (or after) the target segmented word may be determined as a position for mask segment insertion. For example, the position of the target segmented word may be determined through uniform distribution sampling, the position for mask segment insertion may be determined based on the position of the target segmented word, and the mask segment is inserted into the determined position for mask segment insertion. Alternatively, the position of the target segmented word may also be determined through importance sampling, the position for mask segment insertion may be determined based on the position of the target segmented word,and the mask segment is inserted into the determined position for mask segment insertion. The present disclosure does not specifically limit a method for determining the position for mask segment insertion (or the position of the target segmented word), as long as the position for mask segment insertion can be randomly determined.

Inserting mask segments into the first title text may be performed once or multiple times. In addition, an inserted mask segment for each time may indicate a segment for masking one character or a segment for masking a plurality of characters. That is, a mask length of the mask segment inserted into the first title text is not limited in the present disclosure, as long as the mask length can be implemented.

Thereafter, a plurality of second title texts generated by each mask segment insertion may be obtained.

In S103, mask restoration processing is performed on each second title text based on a trained mask restoration model, to obtain a third title text generated by expanding the first title text.

In the embodiments of the present disclosure, the trained mask restoration model may be a sequence-to-sequence neural network model. For example, the trained mask restoration model may be a Bidirectional and Auto-Regressive Transformers (BART) model or a Recurrent Neural Networks (RNN) model.

In the embodiments of the present disclosure, the mask restoration model may be trained based on a title text in which a number of characters is greater than the preset number of characters and a short title corresponding to the title text, to obtain the trained mask restoration model.

During specific implementation, mask processing may be performed on a title text in which a number of characters is greater than the preset number of characters, to obtain a masked title text. In this case, the masked title text includes a masked character and an unmasked title text. Subsequently, the masked title text may be used as input data of the mask training model, and the title text in which the number of characters is greater than the preset number of characters is used as output data, to train the mask restoration model, to obtain the trained mask restoration model. In this case, the trained mask restoration model may restore text content corresponding to the masked character.

It should be noted that mask processing is performed on the title text in which the number of characters is greater than the preset number of characters, and the number of characters of the unmasked title text in the masked title text is the same as or close to the preset number of characters.

In the embodiments of the present disclosure, mask restoration processing may be performed on the mask segment in the second title text by using the trained mask restoration model, and the third title text generated by expanding the first title text may be obtained after mask restoration.

S105: Train a text processing model for title shortening based on the plurality of first title texts and the plurality of third title texts corresponding to each first title text, where for the training of the text processing model, the third title text is used as input data, and the first title text is used as output data.

In the embodiments of the present disclosure, the number of characters in the first title text is less than or equal to the preset number of characters, and the third title text is generated by expanding the first title. Therefore, the text processing model may be trained based on the first title text and the third title text corresponding to the first title text, so that the text processing model may be used to shorten a title text in which a number of characters is greater than the preset number of characters to a title text in which a number of characters is less than or equal to the preset number of characters.

It can be learned from the preceding description that a plurality of first title texts (that is, short title texts) may be acquired, and mask segments are inserted into each first title text multiple times, to obtain a plurality of second title texts generated by each mask segment insertion. Subsequently, mask restoration processing may be performed on each second title text based on a trained mask restoration model, to obtain a third title text generated by expanding the first title text. In this way, a long title text is obtained in a reverse expansion manner, that is, a training sample for training a title shortening model (that is, the text processing model in the embodiments of the present disclosure) is obtained. Then, a text processing model may be trained based on the plurality of first title texts and a plurality of third title texts corresponding to each first title text (each third title text and a corresponding first title text form a long and short title text pair). In addition, the mask segments are inserted into each first title text multiple times, so that each first title text may correspond to a plurality of second title texts, and the number of characters corresponding to each second title text is different. In this way, a number of characters in each third title text obtained after mask restoration processing on the second title text is also different, which not only expands a data volume of training samples for training the text processing model, but also improves training precision and training robustness of the text processing model.

In an optional implementation, the inserting mask segments into each first title text multiple times in S101 specifically includes the following process:
selecting insertion positions in each first title text by using a uniform distribution sampling manner, and inserting the mask segments.

In a specific implementation, word segmentation processing may be performed on the first title text to obtain at least one word segmentation result. Subsequently, a number of the word segmentation results may be counted, a sampling range of uniform distribution sampling may be determined based on the number of the word segmentation results, and the preceding insertion positions may be determined in the sampling range.

In an optional implementation, sampling may be performed multiple times in the sampling range determined based on the number of the word segmentation results, to obtain a plurality of insertion positions, and the mask segments may be inserted into the insertion positions.

In another optional implementation, a plurality of sub-sampling ranges may be determined based on the existing insertion positions in the first title text, and at least one insertion position is determined in at least one sub-sampling range by using the uniform distribution sampling manner.

In the embodiments of the present disclosure, different sampling manners may be used for different mask segment insertions for a same first title text, to obtain a plurality of insertion positions for mask segment insertion.

For example, when the mask segment is inserted into the first title text for the first time, the first insertion position may be determined by using the uniform distribution sampling manner; when the mask segment is inserted into the first title text for the second time, the second insertion position may be determined by using the Poisson distribution sampling manner; and when the mask segment is inserted into the first title text for the third time, the third insertion position may be determined by using the Gaussian distribution sampling manner. In the preceding implementations, the insertion position may be selected in the first title text by using the uniform distribution sampling manner, so that randomness of the selected insertion position can be ensured, and randomness of multiple mask segment insertions into the first title text can be ensured. In this case, when the text processing model is trained based on the second title text after mask segment insertion, robustness of the text processing model can be improved.

In an optional implementation, the trained mask restoration model may be obtained through training according to the following steps.

First, a plurality of fourth title texts are acquired, and mask processing is performed on each fourth title text multiple times, to obtain a plurality of fifth title texts, where a number of characters in the fourth title text is greater than the preset number of characters, a number of characters in the fifth title text is less than or equal to the preset number of characters, and at least one of a mask start position and a number of masked characters selected for each mask processing is different.

Then, a mask restoration model is trained based on the plurality of fourth title texts and a plurality of fifth title texts corresponding to each fourth title text, where the mask restoration model uses the fifth title text as input data, and uses the fourth title text as output data.

In the embodiments of the present disclosure, the fourth title text may be understood as a title text in the title text library, where a number of characters in the fourth title text is greater than the preset number of characters. In the embodiments of the present disclosure, mask processing may be performed on the fourth title text multiple times, to obtain the fifth title text. A number of characters in the fifth title text is the same as or close to the preset number of characters. The closeness may be understood as that the number of characters in the fifth title text is less than the preset number of characters, and an absolute value of a difference between the number of characters in the fifth title text and the preset number of characters is less than or equal to an error threshold.

In this case, a number of times of mask processing performed on the fourth title text is associated with a number of characters in the fifth title text obtained from the last mask processing. For example, after mask processing is performed on the fourth title text once to obtain the fifth title text, the number of characters in the fifth title text may be determined. When it is determined that the number of characters in the fifth title text is greater than the preset number of characters, the next mask processing may be performed on the fourth title text to obtain a processed fifth title text. When it is determined that the number of characters in the fifth title text is less than or equal to the preset number of characters, mask processing on the fourth title text is stopped.

In the embodiments of the present disclosure, in addition to the unmasked title text, the fifth title text may further include a masked character. In this case, the masked character may be understood as a character obtained after mask processing is performed on a character in the fourth title text.

In the embodiments of the present disclosure, after a plurality of fifth title texts corresponding to the fourth title text are obtained (in this case, the fifth title text includes the unmasked title text and the masked character), the fifth title text (the fifth title text includes the unmasked title text and the masked character) may be used as input data, and the fourth title text corresponding to the fifth title text is used as output data to train the mask restoration model, to obtain the trained mask restoration model.

In the preceding implementations, a plurality of fourth title texts may be acquired, and mask processing is performed on each fourth title text to obtain a plurality of fifth title texts. In this case, the fifth title text may be used as input data, and the fourth title text may be used as output data to train the mask restoration model, so that the trained mask restoration model may implement a capability of generating a long title text (for example, the fourth title text in the embodiments of the present disclosure) based on an existing short title text (for example, the fifth title text in the embodiments of the present disclosure). In addition, both the fourth title text and the fifth title text are title texts in the database, which ensures authenticity of the training sample for training the mask restoration model, and further ensures reliability and accuracy of the trained mask restoration model. In this case, when the mask restoration processing is performed on the second title text based on the trained mask restoration model, a more accurate and reliable third title text may be obtained.

In an optional implementation, the performing mask processing on each fourth title text multiple times may be specifically described as the following process:
determining a mask start position for each mask processing by using a uniform distribution sampling manner;
and/or determining a number of masked characters for each mask processing by using a Poisson distribution sampling manner.

In the embodiments of the present disclosure, a sampling range corresponding to the fourth title text may be determined first, and the mask start position for mask processing may be determined in the sampling range by using the uniform distribution sampling manner.

In the embodiments of the present disclosure, the sampling range corresponding to the fourth title text may be determined based on the number of characters corresponding to the fourth title text. In this case, a position of each character may be used as the preceding mask start position. Alternatively, the sampling range corresponding to the fourth title text may be determined based on a number of words included in the fourth title text. In this case, a position of each word may be used as the preceding mask start position. The words included in the fourth title text may be multiple preset characters, for example, "red", "light luxury", and "2022 new style".

In the embodiments of the present disclosure, a random number may be determined by using the uniform distribution sampling manner, and a position before (or after) the character (or word) indicated by the random number may be determined as the preceding mask start position. For example, when the random number determined by using the uniform distribution sampling manner is 3, a position before (or after) the position of the third character (or word) in the fourth title text may be determined as the preceding mask start position.

In the embodiments of the present disclosure, the number of masked characters for mask processing may be determined by using the Poisson distribution sampling manner. A minimum value corresponding to the number of masked characters may be 1, and a maximum value corresponding to the number of masked characters may be an absolute value of a difference between the number of characters in the fourth title text and the preset number of characters. In this case, the sampling interval corresponding to the number of masked characters is a sampling interval formed by the preceding minimum value and the preceding maximum value. In this case, the number of masked characters for mask processing may be determined in the sampling interval by using the Poisson distribution sampling.

It can be learned from the preceding description that, in the embodiments of the present disclosure, when mask processing is performed on each fourth title text, mask processing may be performed on the fourth title text in the following manners.

Manner 1: determining a mask start position for mask processing by using a uniform distribution sampling manner, and performing mask processing on a target number of characters located after the mask start position in the fourth title text.

Here, the target number of characters may be a preset numerical value. In this case, a character number set may be preset for the target number of characters, and a number of elements included in the character number set may be one or more. In this case, the preceding target number of characters may be determined based on the elements in the character number set.

For example, when the number of elements included in the character number set is one, the element included in the character number set may be determined as the target number of characters. When the number of elements included in the character number set is multiple, the elements in the character number set may be sequentially determined as the target number of characters according to a preset arrangement order (for example, an ascending order).

Manner 2: determining the number of masked characters for mask processing by using a Poisson distribution sampling manner, and performing mask processing on the number of masked characters located after a preset mask start position in the fourth title text.

Here, the preset mask start position may be determined based on the number of characters in the fourth title text. In a specific implementation, a plurality of character number intervals may be determined based on the number of characters in the fourth title text, and the mask start position is preset for each character number interval, and the preset mask start position is determined as the preset mask start position. A number of preset mask start positions included in different character number intervals is different.

Manner 3: determining the mask start position for mask processing by using the uniform distribution sampling manner, and determining the number of masked characters for mask processing by using the Poisson distribution sampling manner. Subsequently, mask processing may be performed on the number of masked characters located after the mask start position in the fourth title text.

In the preceding implementations, the mask start position for mask processing may be determined by using the uniform distribution sampling manner, and/or the number of masked characters for mask processing may be determined by using the Poisson distribution sampling manner, so that random mask processing may be performed on the fourth title text, thereby improving randomness and diversity of mask processing performed on the fourth title text.

In an optional implementation, each fourth title text may include at least one text segment with label information. In this case, the label information of at least one text segment in the fourth title text may be acquired.

The label information may indicate attribute information of a product described in the fourth title text. For example, the label information may be information such as a color, a material, a shape, and a style of the product. In this case, each piece of label information may correspond to one text segment, and a number of characters in a text segment corresponding to different pieces of label information may be the same or different. For example, when the label information indicates the color of the product, the text segment corresponding to the label information may be "red" or "yellow"; when the label information indicates the material of the product, the text segment corresponding to the label information may be "soft leather" or "canvas"; and when the label information indicates the style of the product, the text segment corresponding to the label information may be "long style" or "slim fit".

In the embodiments of the present disclosure, when the mask restoration model is trained based on the plurality of fourth title texts and the plurality of fifth title texts corresponding to each fourth title text, the mask restoration model may be trained based on the plurality of fourth title texts, the label information corresponding to each fourth title text, and the fifth title text.

In a specific implementation, after the label information of at least one text segment in each fourth title text is acquired, mask processing may be performed on the fourth title text multiple times based on the label information, to obtain a plurality of fifth title texts. Then, the mask restoration model is trained based on the plurality of fifth title texts and the fourth title text.

In an optional implementation, after the label information of at least one text segment in the fourth title text is acquired, mask processing may be performed on each fourth title text multiple times according to a principle of integrity of the labeled text segment, where the principle of integrity indicates that: the masked fifth title text needs to include all characters in the labeled text segment, or the masked fifth title text does not include any character in the labeled text segment.

In a specific implementation, the labeled text segment may be used as a whole. In this case, when mask processing is performed on the fourth title text multiple times, the number of masked characters may be determined first, and then the mask start position is determined based on the number of masked characters and the labeled mask segment.

For example, when it is determined that the number of masked characters is 3, the mask start position may be determined in a position greater than 3 characters away from the labeled text segment, and mask processing is performed on the fourth title text based on the mask start position and the number of masked characters.

Alternatively, when it is determined that the number of masked characters is 3, a number of characters in the labeled text segment may be determined. When the number of characters in the labeled text segment is less than or equal to 3, three characters including the labeled text segment are determined as masked characters, and mask processing is performed on the masked characters.

In the preceding implementations, mask processing may be performed on the fourth title text multiple times according to the principle of integrity of the labeled text segment to obtain the fifth title text, and the mask restoration model is trained based on the fifth title text and the fourth title text, so that the trained mask restoration model can restore a complete text segment with a specific meaning (that is, including the label information), thereby improving performance of the mask restoration model. In this case, after the mask restoration processing is performed on the second title text based on the trained mask restoration model to obtain the third title text, quality of the obtained third title text can be improved, thereby improving quality of the training sample for training the text processing model, and further improving performance of the trained text processing model.

In another optional implementation, when there are multiple labeled text segments in the fourth title text, mask processing is performed on the fourth title text multiple times according to a frequent mask principle, where the frequent mask principle indicates that: when a labeled text segment in the fourth title text needs to be masked, a target text segment in multiple text segments is masked, where an occurrence frequency of the target text segment in each fourth title text is greater than occurrence frequencies of other text segments in the fourth title text.

In the embodiments of the present disclosure, when the target text segment is determined from multiple labeled text segments included in the fourth title text, an occurrence frequency of each labeled text segment in the fourth title text may be determined.

Here, the occurrence frequency of the labeled text segment may be understood as a proportion of the number of occurrences of the labeled text segment in the text segments included in all fourth title texts.

All fourth title texts may be understood as title texts in the title text library, where the number of characters in each of the all fourth title texts is greater than the preset number of characters. The title text library may be understood as a database including all title texts or a database including all title texts corresponding to any type of product.

In addition, the occurrence frequency of the labeled text segment may also be understood as an occurrence frequency of label information corresponding to the labeled text segment. The occurrence frequency of the label information may be understood as a proportion of a number of occurrences of the label information in all label information corresponding to all fourth title texts.

Thereafter, a text segment with a maximum occurrence frequency may be determined in the fourth title text, and the text segment corresponding with the maximum occurrence frequency may be determined as the target text segment.

In the embodiments of the present disclosure, when mask processing is performed on the fourth title text, the target text segment included in the fourth title text may be preferentially masked, so that a text segment with a relatively high occurrence frequency in the fourth title text is preferentially masked, and therefore the obtained fifth title text may include more text segments with a relatively low occurrence frequency, so that the obtained fifth title text is more distinctive, and quality of the fifth title text is improved. Subsequently, after the mask restoration processing is performed on the second title text based on the trained mask restoration model, the third title text may include a text segment with a relatively high occurrence frequency, so that the text processing model trained based on the third title text can perform shortening processing on the text segment with a relatively high occurrence frequency in the long title, and therefore the processed title text by the text processing model is more distinctive and more attractive.

In an optional implementation, after the label information is acquired and before the mask restoration model is trained based on the plurality of fourth title texts, the label information corresponding to each fourth title text, and the fifth title texts, the embodiments of the present disclosure further include the following process.

A position of the labeled text segment in the fifth title text is randomly adjusted to obtain an adjusted fifth title text, where the adjusted fifth title text is used for participating in the training of the mask restoration model together with the fourth title text and the label information corresponding to the fourth title text.

In the embodiments of the present disclosure, after the label information is acquired, a text segment corresponding to each piece of the label information may be determined to obtain the labeled text segment. Subsequently, mask processing may be performed on the fourth title text multiple times based on the labeled text segment, to obtain the fifth title text. In this case, the fifth title text includes the masked character and the unmasked title text, and the unmasked title text may include the labeled text segment.

Subsequently, a position of the masked character and a position of the labeled text segment in the fifth title text may be randomly adjusted, to obtain the adjusted fifth title text. In this case, the labeled text segment may be adjusted as a whole.

Subsequently, the adjusted fifth title text may be used as input data, and the fourth title text may be used as output data to train the mask restoration model, so that the trained mask restoration model has a capability of adjusting an order.

An implementation process of a text processing model training manner provided in the embodiments of the present disclosure is described in detail below with reference to a schematic flowchart.

In the embodiments of the present disclosure, before the text processing model is trained, the mask restoration model may be trained first, and then the training sample for training the text processing model is generated based on the trained mask restoration model. Subsequently, the text processing model may be trained based on the generated training sample.

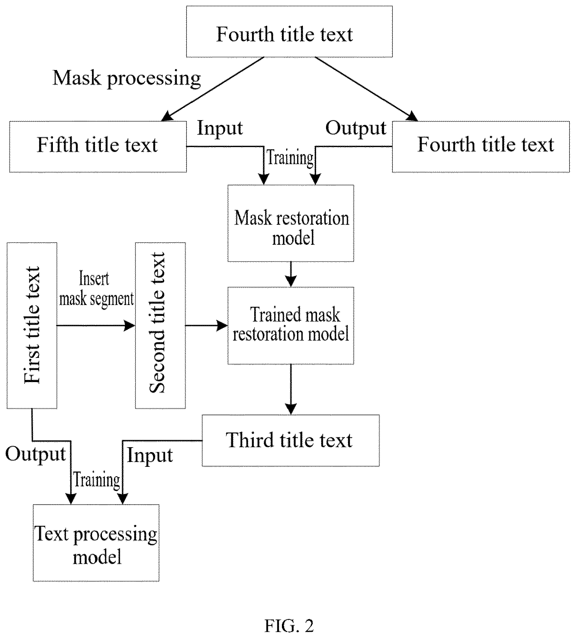

For example, as shown in FIG. 2, the fourth title text may be acquired first, and mask processing is performed on the fourth title text, to obtain the fifth title text after mask processing. A number of characters in the fourth title text is greater than the preset number of characters.

Subsequently, the fifth title text may be used as input data, and the fourth title text may be used as output data to train the mask restoration model, to obtain the trained mask restoration model.

Subsequently, the first title text may be acquired, and the mask segment is inserted into the first title text to obtain the second title text. Then, mask restoration processing may be performed on the second title text based on the trained mask restoration model, to obtain the third title text generated by expanding the first title text.

Finally, the third title text is used as input data, and the first title text is used as output data, to train the text processing model, to obtain the trained text processing model.

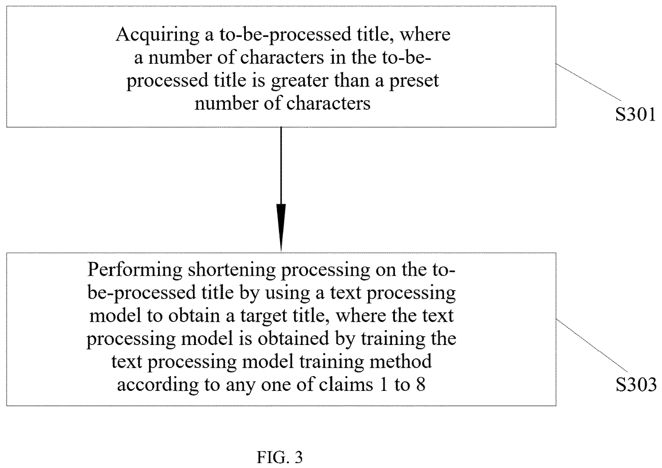

Referring to FIG. 3, a flowchart of a title generation method according to an embodiment of the present disclosure is shown. The method includes steps S301 to S303.

In S301, a to-be-processed title is acquired, where a number of characters in the to-be-processed title is greater than a preset number of characters.

In S303, shortening processing is performed on the to-be-processed title by using a text processing model to obtain a target title, where the text processing model is trained by the text processing model training method according to any one of the first aspect.

Here, the preset number of characters may be understood as the preset number of characters used when the text processing model is trained. That is, the preset number of characters may indicate a maximum number of characters corresponding to a title text that is expected to be obtained by the text processing model. In this case, the preset number of characters may be a preset numerical value. For example, the preset number of characters may be n (n is a natural number greater than 0. For example, n may be 5 or 10).

In the embodiments of the present disclosure, the acquired to-be-processed title may be input into the text processing model for shortening processing, to obtain a target title in which a number of characters is less than or equal to the preset number of characters.

It can be learned from the preceding description that after the to-be-processed title is acquired, the shortening processing may be performed on the to-be-processed title by using the text processing model, to obtain the target title, so that the to-be-processed title may be automatically and efficiently shortened, to obtain the target title that better meets a display requirement, thereby improving user experience.

Those of ordinary skill in the art may understand that in the preceding methods of specific implementations, the writing sequence of the steps does not mean that the execution sequence is strictly limited to the implementation process, and the specific execution sequence of the steps should be determined based on functions and possible internal logic of the steps.

Based on the same inventive concept, the embodiments of the present disclosure further provide a text processing model training apparatus corresponding to the text processing model training method. Since the text processing model training apparatus in the embodiments of the present disclosure solves problems based on principles similar to those of the text processing model training method in the embodiments of the present disclosure, for the implementation of the apparatus, reference may be made to the implementation of the method, and details are not described herein again.

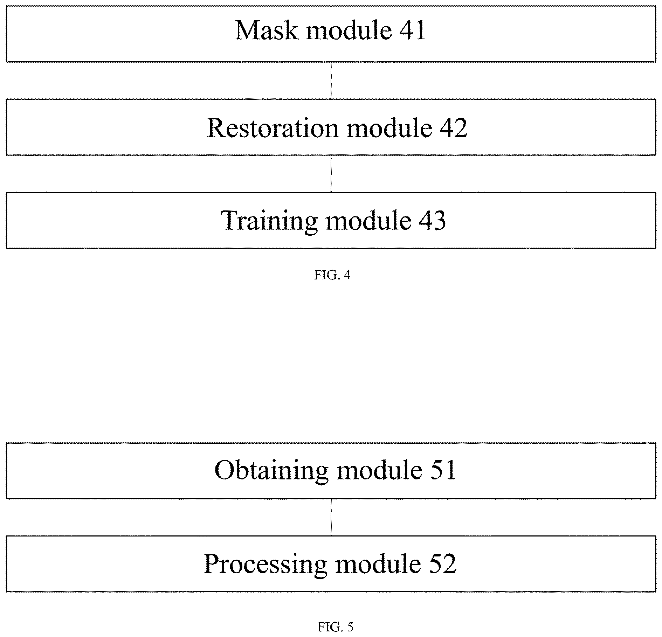

Referring to FIG. 4, a schematic diagram of a text processing model training apparatus according to an embodiment of the present disclosure is shown. The apparatus includes a mask module 41, a restoration module 42, and a training module 43.

The mask module 41 is configured to acquire a plurality of first title texts, and insert mask segments into each first title text multiple times, to obtain a plurality of second title texts generated by each mask segment insertion, where mask segments are inserted into different positions of the first title text each time, and a number of characters in the first title text is less than or equal to a preset number of characters.

The restoration module 42 is configured to perform mask restoration processing on each second title text based on a trained mask restoration model, to obtain a third title text generated by expanding the first title text.

The training module 43 is configured to train a text processing model for title shortening based on the plurality of first title texts and a plurality of third title texts corresponding to each first title text, where in the training process of the text processing model, the third title text is used as input data, and the first title text is used as output data.

It can be learned from the preceding description that a plurality of first title texts (that is, short title texts) may be acquired, and mask segments are inserted into each first title text multiple times, to obtain a plurality of second title texts generated by each mask segment insertion. Subsequently, mask restoration processing may be performed on each second title text based on a trained mask restoration model, to obtain a third title text generated by expanding the first title text. In this way, a long title text is obtained in a reverse expansion manner, that is, a training sample for training a title shortening model (that is, the text processing model in the embodiments of the present disclosure) is obtained. Then, a text processing model may be trained based on the plurality of first title texts and a plurality of third title texts corresponding to each first title text ( each third title text and a corresponding first title text form a long and short title text pair). In addition, the mask segments are inserted into each first title text multiple times, so that each first title text may correspond to a plurality of second title texts, and the number of characters corresponding to each second title text is different. In this way, a number of characters in each third title text obtained by mask restoration processing performed on the second title text is also different, which not only expands a data volume of training samples for training the text processing model, but also improves training precision and training robustness of the text processing model.

In an optional implementation, the mask module 41 is further configured to: select insertion positions in each first title text by using a uniform distribution sampling manner, and insert the mask segments.

In an optional implementation, the restoration module 42 is further configured to: acquire a plurality of fourth title texts, and perform mask processing on each fourth title text multiple times, to obtain a plurality of fifth title texts, where a number of characters in the fourth title text is greater than the preset number of characters, a number of characters in the fifth title text is less than or equal to the preset number of characters, and at least one of a mask start position or a number of masked characters selected for each mask processing is different; and train a mask restoration model based on the plurality of fourth title texts and a plurality of fifth title texts corresponding to each fourth title text, where the mask restoration model uses the fifth title text as input data, and uses the fourth title text as output data.

In an optional implementation, the restoration module 42 is further configured to: determine a mask start position for each mask processing by using a uniform distribution sampling manner; and/or determine a number of masked characters for each mask processing by using a Poisson distribution sampling manner.

In an optional implementation, the restoration module 42 is further configured to: acquire label information of at least one text segment in the fourth title text, where the training a mask restoration model based on the plurality of fourth title texts and a plurality of fifth title texts corresponding to each fourth title text includes: training the mask restoration model based on the plurality of fourth title texts, the label information corresponding to each fourth title text, and the fifth title texts.

In an optional implementation, the restoration module 42 is further configured to: perform mask processing on each fourth title text multiple times according to a principle of integrity of the labeled text segment, where the principle of integrity indicates that: the masked fifth title text needs to include all characters in the labeled text segment, or the masked fifth title text does not include any character in the labeled text segment.

In an optional implementation, the restoration module 42 is further configured to: when there are multiple labeled text segments in the fourth title text, perform mask processing on the fourth title text multiple times according to a frequent mask principle, where the frequent mask principle indicates that: when a labeled text segment in the fourth title text needs to be masked, a target text segment in multiple text segments is masked, where an occurrence frequency of the target text segment in each fourth title text is greater than occurrence frequencies of other text segments in the fourth title text.

In an optional implementation, the restoration module 42 is further configured to: after the label information is acquired and before the mask restoration model is trained based on the plurality of fourth title texts, the label information corresponding to each fourth title text, and the fifth title texts, randomly adjust a position of the labeled text segment in the fifth title text to obtain an adjusted fifth title text, where the adjusted fifth title text is used for participating in the training of the mask restoration model together with the fourth title text and the label information corresponding to the fourth title text.

Based on the same inventive concept, the embodiments of the present disclosure further provide a title generation apparatus corresponding to the title generation method. Since the title generation apparatus in the embodiments of the present disclosure solves problems based on principles similar to those of the title generation method in the embodiments of the present disclosure, for the implementation of the apparatus, reference may be made to the implementation of the method, and details are not described herein again.

Referring to FIG. 5, a schematic diagram of a title generation apparatus according to an embodiment of the present disclosure is shown. The apparatus includes an obtaining module 51 and a processing module 52.

The obtaining module 51 is configured to obtain a to-be-processed title, where a number of characters in the to-be-processed title is greater than a preset number of characters.

The processing module 52 is configured to perform shortening processing on the to-be-processed title by using a text processing model to obtain a target title, where the text processing model is trained by the text processing model training method according to any one of the first aspect.

It can be learned from the preceding description that after the to-be-processed title is acquired, the shortening processing may be performed on the to-be-processed title by using the text processing model, to obtain the target title, so that the to-be-processed title may be automatically and efficiently shortened, to obtain the target title that better meets a display requirement, thereby improving user experience.

For descriptions of processing flows of modules in the apparatus and interaction flows between the modules, reference may be made to related descriptions in the preceding method embodiments, and details are not described herein again.

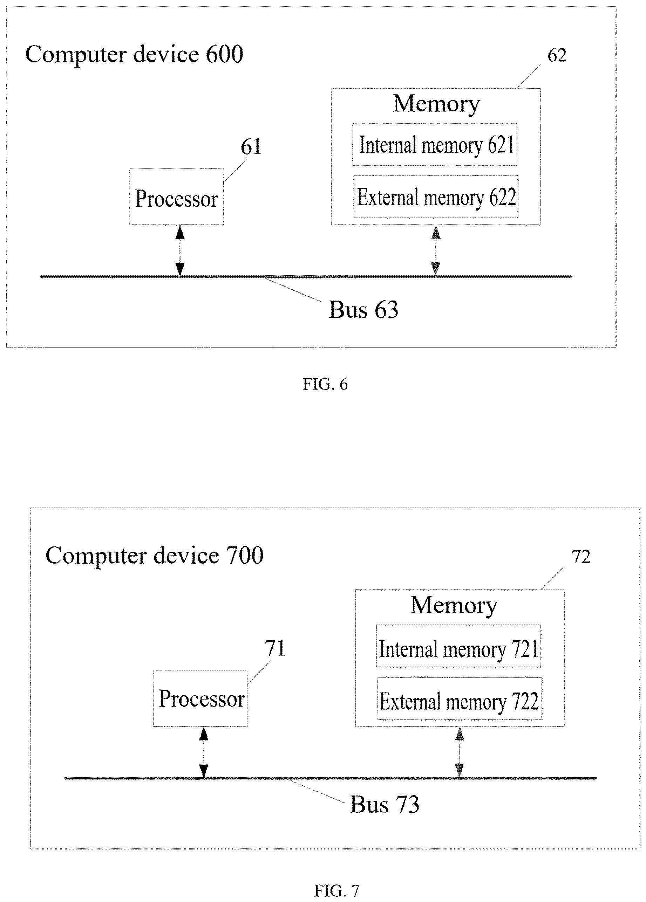

Corresponding to the text processing model training method in FIG. 1, the embodiments of the present disclosure further provide a computer device 600. As shown in FIG. 6 which is a schematic diagram of a structure of the computer device 600 provided in the embodiments of the present disclosure, the computer device 600 includes:
a processor 61, a memory 62, and a bus 63, where the memory 62 is configured to store execution instructions, and includes an internal memory 621 and an external memory 622. The internal memory 621 herein, also known as an internal memory, is configured to temporarily store operation data in the processor 61 and data exchanged with the external memory 622 such as a hard disk. The processor 61 exchanges data with the external memory 622 through the internal memory 621. When the computer device 600 runs, the processor 61 communicates with the memory 62 through the bus 63, causing the processor 61 to execute the following instructions:
acquiring a plurality of first title texts, and inserting mask segments into each first title text multiple times, to obtain a plurality of second title texts generated by each mask segment insertion, where mask segments are inserted into different positions of the first title text each time, and a number of characters in the first title text is less than or equal to a preset number of characters;
performing mask restoration processing on each second title text based on a trained mask restoration model, to obtain a third title text generated by expanding the first title text; and
training a text processing model for title shortening based on the plurality of first title texts and a plurality of third title texts corresponding to each first title text, where in training of the text processing model, the third title text is used as input data, and the text is used as output data.

Corresponding to the title generation method in FIG. 3, the embodiments of the present disclosure further provide another computer device 700. As shown in FIG. 7 which is a schematic diagram of a structure of the computer device 700 provided in the embodiments of the present disclosure, the computer device 700 includes: a processor 71, a memory 72, and a bus 73, where the memory 72 is configured to store execution instructions, and includes an internal memory 721 and an external memory 722. The internal memory 721 herein, also known as an internal memory, is configured to temporarily store operation data in the processor 71 and data exchanged with the external memory 722 such as a hard disk. The processor 71 exchanges data with the external memory 722 through the internal memory 721. When the computer device 700 runs, the processor 71 communicates with the memory 72 through the bus 73, causing the processor 71 to execute the following instructions:
acquiring a to-be-processed title, where a number of characters in the to-be-processed title is greater than a preset number of characters; and
performing shortening processing on the to-be-processed title by using a text processing model to obtain a target title, where the text processing model is trained by any one of the text processing model training methods.

The present disclosure embodiments further provide a computer-readable storage medium, where the computer-readable storage medium stores a computer program that, when run by a processor, causes the processor to perform the steps of the text processing model training method according to the preceding method embodiments, or perform the steps of the title generation method according to the preceding method embodiments. The storage medium may be a volatile or non-volatile computer-readable storage medium.

The present disclosure embodiments further provide a computer program product, where the computer program product carries program codes, and instructions included in the program codes may be used for performing the steps of the text processing model training method according to the preceding method embodiments, or performing the steps of the title generation method according to the preceding method embodiments. For details, refer to the preceding method embodiments, and details are not described herein again.

The preceding computer program product may be specifically implemented in hardware, software, or a combination thereof. In an optional embodiment, the computer program product is specifically embodied as a computer storage medium. In another optional embodiment, the computer program product is specifically embodied as a software product, such as a software development kit (SDK).

It can be clearly understood by those skilled in the art that, for convenience and brevity of description, for the specific working processes of the system and apparatus described above, reference may be made to the corresponding processes in the preceding method embodiments, and details are not described herein again. In the several embodiments provided in the present disclosure, it should be understood that the disclosed system, apparatus, and method may be implemented in other manners. The apparatus embodiments described above are only schematic. For example, the division of the modules is only a logical function division, and there may be other division manners during actual implementation. For another example, multiple modules or components may be combined or integrated into another system, or some features may be ignored or not executed. In addition, the mutual coupling or direct coupling or communication connection shown or discussed may be an indirect coupling or communication connection through some communication interfaces, and the indirect coupling or communication connection of the apparatus or module may be electrical, mechanical, or in other forms.

The modules described as separate components may or may not be physically separate, and the components displayed as modules may or may not be physical modules, that is, the components may be located in one place, or may be distributed on multiple network modules. Some or all of the modules may be selected according to actual needs to implement the objectives of the solutions of the embodiments.

In addition, the functional modules in the embodiments of the present disclosure may be integrated in one processing module, or each module may exist physically alone, or two or more modules may be integrated in one module.

If the functions are implemented in the form of software functional modules and sold or used as independent products, the functions may be stored in a non-volatile computer-readable storage medium executable by a processor. Based on such understanding, the substantial part or the part that contributes to the related art of the technical solutions of the present disclosure or the part of the technical solutions may be embodied in the form of a software product. The computer software product is stored in a storage medium and includes several instructions for causing a computer device (which may be a personal computer, a server, or a network device, etc.) to perform all or part of the steps of the methods described in the embodiments of the present disclosure.

The preceding storage medium includes various media that may store program codes, such as a USB flash disk, a mobile hard disk, a read-only memory (ROM), a random-access memory (RAM), a magnetic disk, or an optical disk.

Finally, it should be noted that the preceding embodiments are merely specific implementations of the present disclosure, and are used to illustrate the technical solutions of the present disclosure, rather than limiting them. The protection scope of the present disclosure is not limited thereto. Although the present disclosure has been described in detail with reference to the preceding embodiments, those of ordinary skill in the art should understand that any person skilled in the art may still modify the technical solutions described in the preceding embodiments or make changes readily conceivable within the technical scope disclosed in the present disclosure, or make equivalent replacements to some technical features thereof. These modifications, changes, or replacements do not make the essence of the corresponding technical solutions deviate from the spirit and scope of the technical solutions of the embodiments of the present disclosure, and are all encompassed within the protection scope of the present disclosure. Therefore, the protection scope of the present disclosure should be subject to the protection scope of the claims.

## Claims

1. A text processing model training method, comprising:
acquiring a plurality of first title texts, inserting mask segments into each first title text multiple times, to obtain a plurality of second title texts generated by each mask segment insertion, wherein mask segments are inserted into different positions of the first title text each time, and a number of characters in the first title text is less than or equal to a preset number of characters;
performing mask restoration processing on each second title text based on a trained mask restoration model, to obtain a third title text obtained by expanding the first title text; and
training a text processing model for title shortening based on the plurality of first title texts and a plurality of third title texts corresponding to each first title text, wherein for the training of the text processing model, the third title text is used as input data, and the first title text is used as output data.

2. The method according to claim 1, wherein the inserting mask segments into each first title text multiple times comprises:
selecting insertion positions in each first title text by using a uniform distribution sampling manner, and inserting the mask segments.

3. The method according to claim 1, wherein the trained mask restoration model is obtained through training according to the following steps:
acquiring a plurality of fourth title texts, and performing mask processing on each fourth title text multiple times, to obtain a plurality of fifth title texts, wherein a number of characters in the fourth title text is greater than the preset number of characters, a number of characters in the fifth title text is less than or equal to the preset number of characters, and at least one of a mask start position and a number of masked characters selected for each mask processing is different; and
training a mask restoration model based on the plurality of fourth title texts and a plurality of fifth title texts corresponding to each fourth title text, wherein the mask restoration model uses the fifth title text as input data, and uses the fourth title text as output data.

4. The method according to claim 3, wherein the performing mask processing on each fourth title text multiple times comprises at least one of:
determining a mask start position for each mask processing by using a uniform distribution sampling manner; and
determining a number of masked characters for each mask processing by using a Poisson distribution sampling manner.

5. The method according to claim 3, further comprising:
acquiring label information of at least one text segment in the fourth title text,
wherein the training a mask restoration model based on the plurality of fourth title texts and a plurality of fifth title texts corresponding to each fourth title text comprises:
training the mask restoration model based on the plurality of fourth title texts, the label information corresponding to each fourth title text, and the fifth title text.

6. The method according to claim 5, wherein the performing mask processing on each fourth title text multiple times comprises:
performing mask processing on each fourth title text multiple times according to a principle of integrity of the labeled text segment,
wherein the principle of integrity indicates at least one of: the masked fifth title text needs to comprise all characters in the labeled text segment, or the masked fifth title text does not comprise any character in the labeled text segment.

7. The method according to claim 5 or 6, wherein the performing mask processing on each fourth title text multiple times comprises:
when there are multiple labeled text segments in the fourth title text, performing mask processing on the fourth title text multiple times according to a frequent mask principle,
wherein the frequent mask principle indicates that: when a labeled text segment in the fourth title text needs to be masked, a target text segment in multiple text segments is masked, wherein an occurrence frequency of the target text segment in each fourth title text is greater than occurrence frequencies of other text segments in the fourth title text.

8. The method according to claim 5, wherein after the label information is acquired and before the mask restoration model is trained based on the plurality of fourth title texts, the label information corresponding to each fourth title text, and the fifth title text, the method further comprises:
randomly adjusting a position of the labeled text segment in the fifth title text to obtain an adjusted fifth title text, wherein the adjusted fifth title text is used for participating in the training of the mask restoration model together with the fourth title text and the label information corresponding to the fourth title text.

9. A title generation method, comprising:
acquiring a to-be-processed title, wherein a number of characters in the to-be-processed title is greater than a preset number of characters; and
performing shortening processing on the to-be-processed title by using a text processing model to obtain a target title, wherein the text processing model is trained by the text processing model training method according to any one of claims 1 to 8.

10. A text processing model training apparatus, comprising:
a mask module, configured to acquire a plurality of first title texts, and insert mask segments into each first title text multiple times, to obtain a plurality of second title texts generated by each mask segment insertion, wherein mask segments are inserted into different positions of the first title text each time, and a number of characters in the first title text is less than or equal to a preset number of characters;
a restoration module, configured to perform mask restoration processing on each second title text based on a trained mask restoration model, to obtain a third title text obtained by expanding the first title text; and
a training module, configured to train a text processing model for title shortening based on the plurality of first title texts and a plurality of third title texts corresponding to each first title text, wherein for the training of the text processing model, the third title text is used as input data, and the first title text is used as output data.

11. A title generation apparatus, comprising:
an obtaining module, configured to obtain a to-be-processed title, wherein a number of characters in the to-be-processed title is greater than a preset number of characters; and
a processing module, configured to perform shortening processing on the to-be-processed title by using a text processing model to obtain a target title, wherein the text processing model is trained by the text processing model training method according to any one of claims 1 to 8.

12. A computer device, comprising: a processor, a memory, and a bus, wherein the memory stores machine-readable instructions executable by the processor, when the computer device runs, the processor communicates with the memory through the bus, and the machine-readable instructions, when executed by the processor, cause the processor to perform the steps of the text processing model training method according to any one of claims 1 to 8, or perform the steps of the title generation method according to claim 9.

13. A computer-readable storage medium storing a computer program that, when run by a processor, causes the processor to perform the steps of the text processing model training method according to any one of claims 1 to 8, or perform the steps of the title generation method according to claim 9.

14. A computer program product that, when executed by a processor, causes the processor to implement the text processing model training method according to any one of claims 1 to 8 or the title generation method according to claim 9.
